# EUROPEAN PATENT SPECIFICATION

(11) **EP 0 966 880 B1**
(45) Date of publication and mention of the grant of the patent: **14.11.2001**
(21) Application number: 98305030.3
(22) Date of filing: 25.06.1998
(51) Int. Cl.: A01G 31/06

(54) **Sprout cultivation box with an automatic water supply and balancing device**
Sprossenzuchtbehälter mit selbsttätiger Wasserzufuhr und Ausgleichvorrichtung
Récipient pour la culture de pousses, avec apport d'eau automatique et dispositif d'ajustement

(43) Date of publication of application: 29.12.1999
(73) Proprietor: Lo, Kung-Shen, Chung Ho, Taipei Hsuen (TW); Peng, Li-Tai, Taipei (TW)
(72) Inventor: Lo, Kung-Shen, Chung Ho, Taipei Hsuen (TW); Peng, Li-Tai, Taipei (TW)
(74) Representative: Alexander, Thomas Bruce

(56) References cited:
- FR-A- 2 554 315
- GB-A- 2 164 535
- GB-A- 2 313 031
- GB-A- 2 318 716
- US-A- 3 945 148

## Description

The invention relates to a cultivation box for bean sprouts which includes an automatic water regulating and balancing device. The box is particularly suited to bean sprout cultivation, providing precise water irrigation, and growth control of the sprouts, for improving the efficiency of production and the quality of bean sprouts cultivated.

Conventionally, three types of water supply in sprout cultivation are used; they are showering, spraying and soaking. US 3 945 148 deals with an irrigation system that supplies water at the top of the cultivating box and drains it at the butter of the cultivating box. For mass production a well controlled water supply is necessary to ensure the product quality. In this case, showering and spraying are usually not satisfactory to provide each control. However, though soaking for sprout cultivation could provide better production quality, there are disadvantages in huge water consumption, temperature gradient of the circulating water, and the timing of the water supply may also be problematic. As a result, heterogeneous sprout production and bacteria contamination can be expected.

Furthermore, for different types of beans (such as green beans, soybeans, small red beans, peas and so on) the appropriate water consumption and irrigation timing in a single cultivation container for soakage, sprouting, and growing are sometimes hard to achieve. Frequently, it is necessary to change the container to guarantee the sprout quality. Therefore, the invention aims to resolve the aforesaid disadvantages of current cultivation practice.

Accordingly, it is a primary object of the present invention to provide a sprout cultivation box with an automatic water regulating and balancing device for precisely controlling the water supply, balancing the circulating water, and reducing water consumption.

The present invention provides apparatus for cultivating bean sprouts as set out in claim 1. The sprout cultivation box includes an elastically biased cover with a concave bottom surface and a compartmentalised tray for holding beans, forming a cultivation space in between and preventing arbitrary movement of the beans inside. While the sprouts are growing, the elastically biased cover will be lifted but will increase the restraint on the top of the sprouts to thus enhance generation by the sprouts of a special natural chemical which improves the growth quality of the cultivated sprouts. Also, the elastic biasing of the cover inhibits the shaking of a cultivation unit in the cultivation box.

It is another object of the present invention to provide a sprout cultivation box with an automatic water regulating and balancing device, which comprises a water-feeding device for precisely and automatically regulating the water circulation inside the sprout cultivation box in all three stages of soaking, sprouting and cultivating. By providing the water-feeding device and the elastically biased cover, improvements in quality and production are achieved.

It is a further object of the present invention to provide a sprout cultivation apparatus with an automatic water regulating and balancing device, in which the water-feeding device can be optimally arranged to supply a stack of cultivation boxes to suit any desired application.

All these objects are achieved by the sprout cultivation box with an automatic water regulating and balancing device described below.

The present invention will now be specified with reference to its preferred embodiments illustrated in the drawings, in which:
FIGURE 1 is an exploded perspective view of a preferred cultivation box and a water feeding connector in accordance with the present invention;
FIGURE 2 is a perspective view of a preferred elastic engaging means for use in the present invention;
FIGURE 3A is a cross-section of a portion of a preferred cultivation box according to the present invention with beans inside, showing the elastic engaging means before engagement;
FIGURE 3B is a cross-section of a portion of a preferred cultivation box according to the present invention with beans inside, showing the elastic engaging means in the engaged position;
FIGURE 4 is a cross-section of a preferred cultivation box according to the present invention with beans inside, viewing at 90 degrees to Figure 3;
FIGURE 5 is a cross-section of a preferred cultivation box according to the present invention with full grown sprouts;
FIGURE 6A is a cross-section of a portion of a preferred cultivation box according to the present invention with fully grown sprouts, showing the spring belt still engaged inside the cultivation box;
FIGURE 6B is a cross-section of a portion of a preferred cultivation box according to the present invention with fully grown sprouts, showing the elastic engaging means being disassembled;
FIGURE 7A is a cross-section of a portion of a preferred cultivation box according to the present invention, showing a preferred water adapter with a filtering screen installed;
FIGURE 7B is a schematic view of a preferred filtering screen according to the present invention;
FIGURE 8 is a schematic view of a preferred embodiment of stacking a plurality of the cultivation boxes according to the present invention;

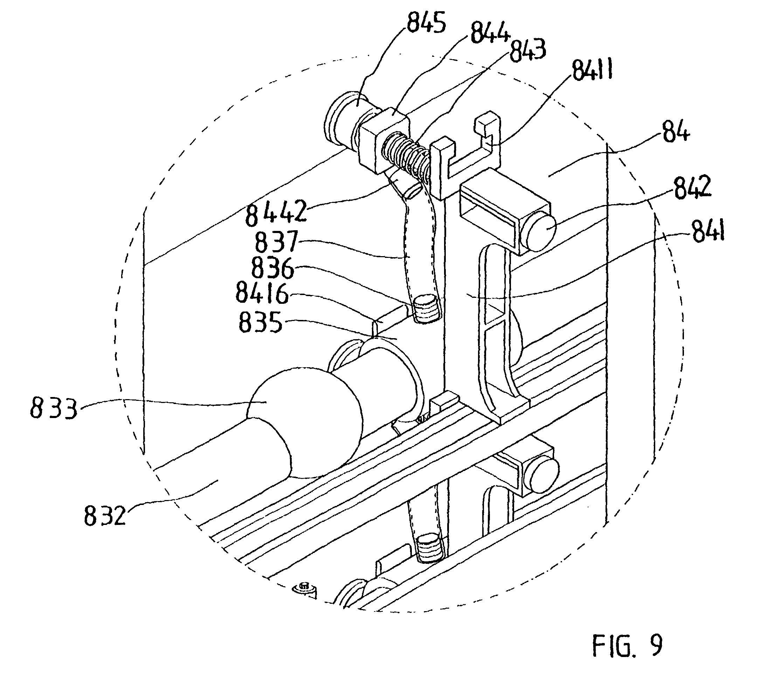

FIGURE 9 is an enlarged view of portion A in FIGURE 8;
FIGURE 10 is a side view of the preferred embodiment shown in FIGURE 8;
FIGURE 11 is an exploded perspective view of a preferred water feed connector for use with the present invention;
FIGURE 12 is a schematic view showing a preferred water feed connector and the relative piping for use with the present invention;
FIGURE 13 is a schematic view showing the engagement of two water feed connectors for use with the present invention;
FIGURE 14 is a cross-section showing the connection between the preferred dual connector of the water feed connector and the water adapter of the cultivation box for use with the present invention;
FIGURE 15 is a schematic view of another embodiment of stacking a plurality of the cultivation boxes according to the present invention; and
FIGURE 16 is a side view of the embodiment illustrated in Figure 15.

The invention disclosed herein is directed to a sprout cultivation apparatus with an automatic water regulating and balancing device. In the following description, numerous details are set forth in order to provide a thorough understanding of the present invention. It will be appreciated by one skilled in the art that variations of these specific details are possible while still achieving the results of the present invention. In other instances, well-known components are not described in detail in order not to unnecessarily obscure the present invention.

The apparatus of the present invention has proved to be advantageous in intensive field testing. The connection of a cultivation box 4 with a water-feeding device 8 provides a superior cultivating environment for rapid sprout growth without the need to change the cultivation box.

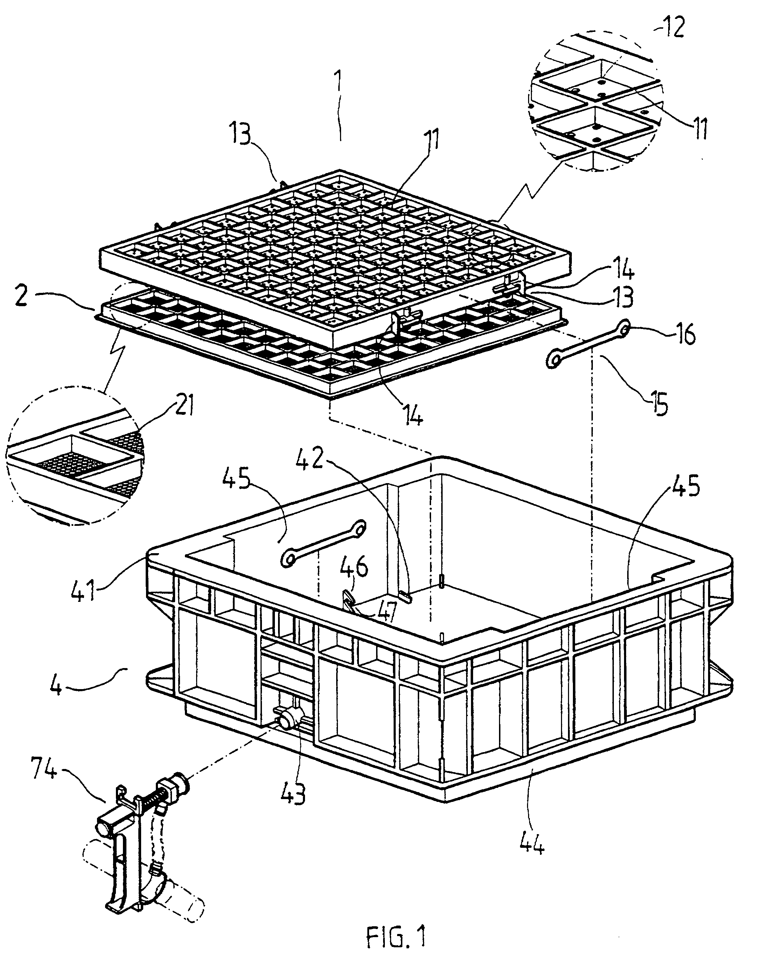

Referring now Figure 1, the cultivation box has a perforate cover 1 on top. The perforate cover 1 is connected to the cultivation box 4 by resilient attachment means for providing elastic restraint on the top of the growing sprouts thereby to enhance the sprout growth by encouraging them to produce helpful chemicals. The cover 1 further has an integral grid of equi-spaced reinforcing ribs 11 and a plurality of air holes 12 for permeation of air as well as water. In addition, the elastic cover 1 further comprises a pair of hook sets 13 located on opposing sides for firmly connecting with spring belts 15 through an aperture at the end 16. Each hook set 13 further comprises a wider, stronger, protective plate 14 for preventing the elastic cover 1 from exterior collision. According to the present invention, the spring belt 15 can be made of rubber, plastic, a tensile spring with ring ends, or in any other convenient form.

According to the present invention, the cultivation box 4 further comprises a carrier plate 2, which is like a containing dish and has an protruding step-shaped edge to engage with the cover 1 on top. The carrier plate 2 further has a plurality of tiny compartments 21 at corresponding positions to the grid of reinforcing ribs 11 of the elastic cover 1 for anchoring beans in the tiny enclosed space formed in between the carrier plate 2 and the cover 1. The height of the compartment 21 can be about the thickness of the cultivated bean after soakage. Such an arrangement of the elastic cover 1 and the carrier plate 2 inhibits beans in the compartments 21 from arbitrary motion and overlapping, which will be helpful to the bean's rooting or its cutoff of the roots.

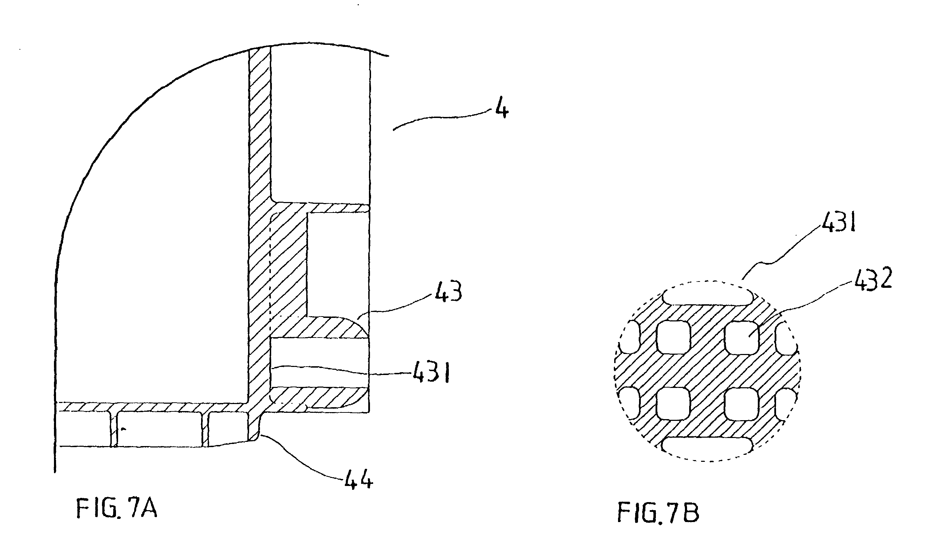

The cultivation box 4, which is essentially a weight-saving and reinforced box with one side open, has an upper flange 41 located at the top and a lower flange 44 located exterior to the bottom edge for stacking on top of another cultivation box 4. At one external side of the cultivation box 4, a protruding water adapter 43 (also as shown in Figure 7A) is located at a height above the interior bottom surface of the cultivation box 4. The external water adapter 43 further has a filtering screen 431 with an integrated filtering hole 432 for restraining the bean shells within the cultivation box 4 without inhibiting the water circulation. At the interior bottom edge of the cultivation box 4, a plurality of equal-height spacing bumps 42 are located for providing a substantial spacing between the bottom surface and the carrier plate 2 to accommodate a sufficient amount of water for the downward extending roots of the beans in the compartments 21. In addition, the cultivation box 4 further comprises a pair of internal recesses 45 located on opposing side walls for providing enough space to accommodate the hook sets 13 of the elastic cover 1. Preferably, the recess 45 further provides at least one anchoring set 46 with a hooking end 47 between the recess and the hook set 13 after installation, for positioning the spring belt 15.

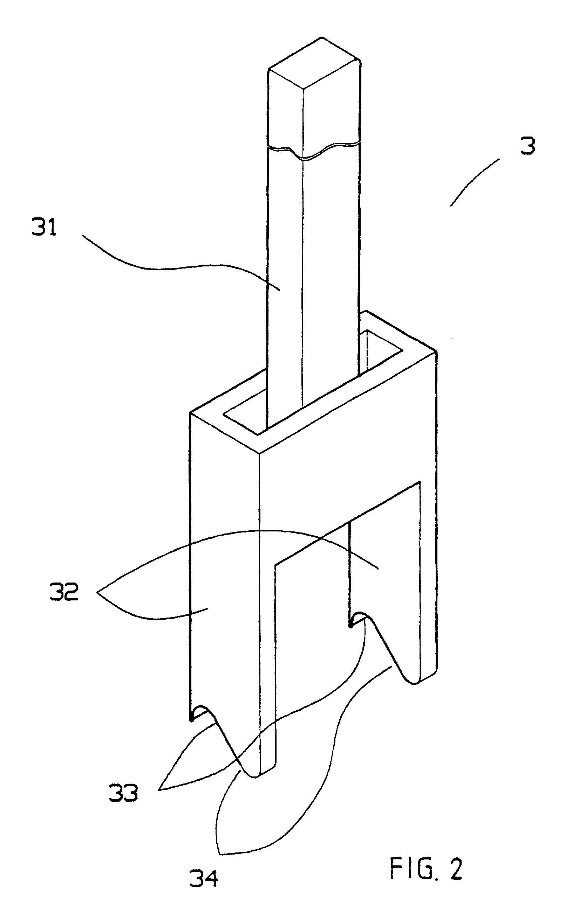

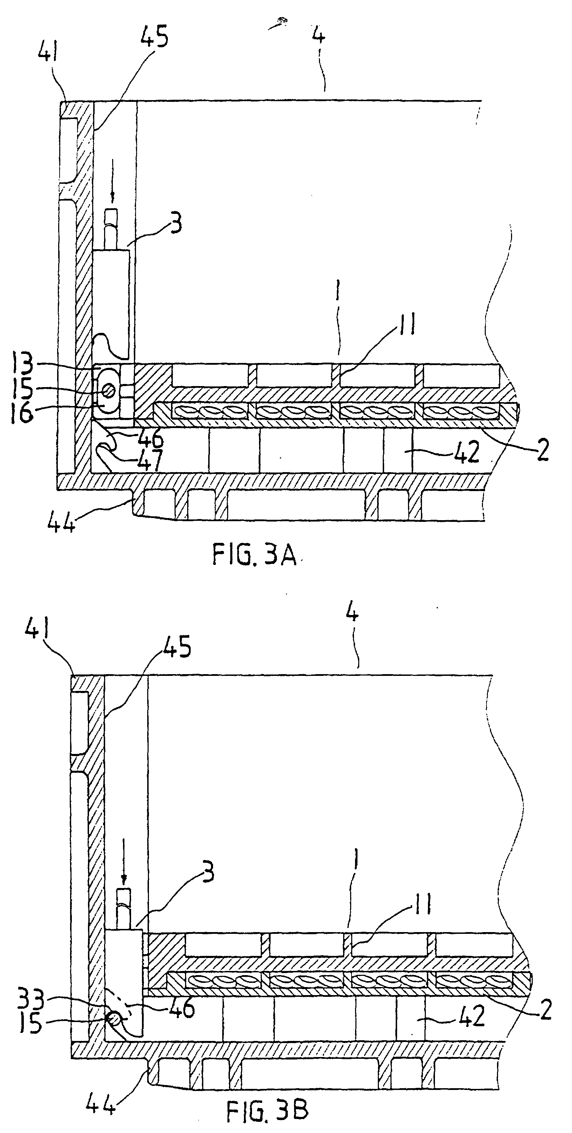

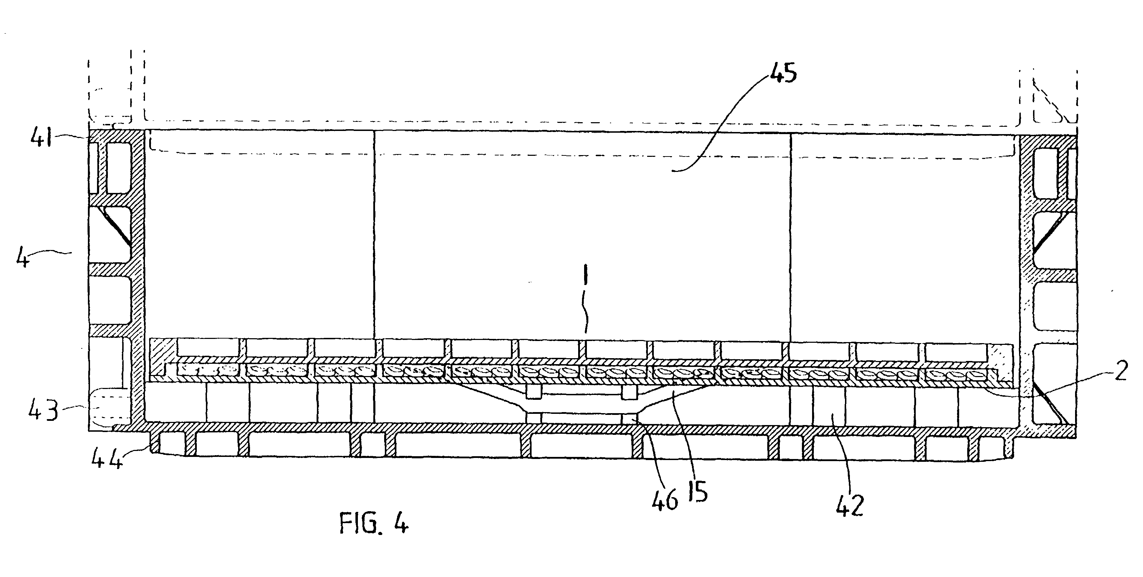

Referring now to Figure 3 and Figure 4, after placement of beans in the cultivation box 4, an elastic engaging means 3 (as shown in Figure 2) can be used to ensure firm engagement of a cultivation unit (including the cover 1 and the carrier plate 2) and the anchoring sets 46, in order to resolve the problem of floating after water is supplied and the resistance from the sprout growth. In accordance with the present invention, the elastic engaging means 3 for rapidly connecting and disconnecting the spring belts 15, comprises a manoeuvring bar 31 extending downward and separating to form a pair of cross plates 32, and each cross plate 32 further comprises a locating recess 33 and protruding release tip 34 at the bottom end. The locating recess 33 is used to press down one end of the spring belt 15 fastened to the hook set 13 of the elastic cover 1 at another end, and to slip the end into the hooking end 47 of the anchoring set 46 for anchoring the cultivation unit (as illustrated in Figure 3A and Figure 3B). Preferably in a automation application, the manoeuvring bar 31 of the elastic engaging means 3 can be operated by a robot with suitable rotational capability.

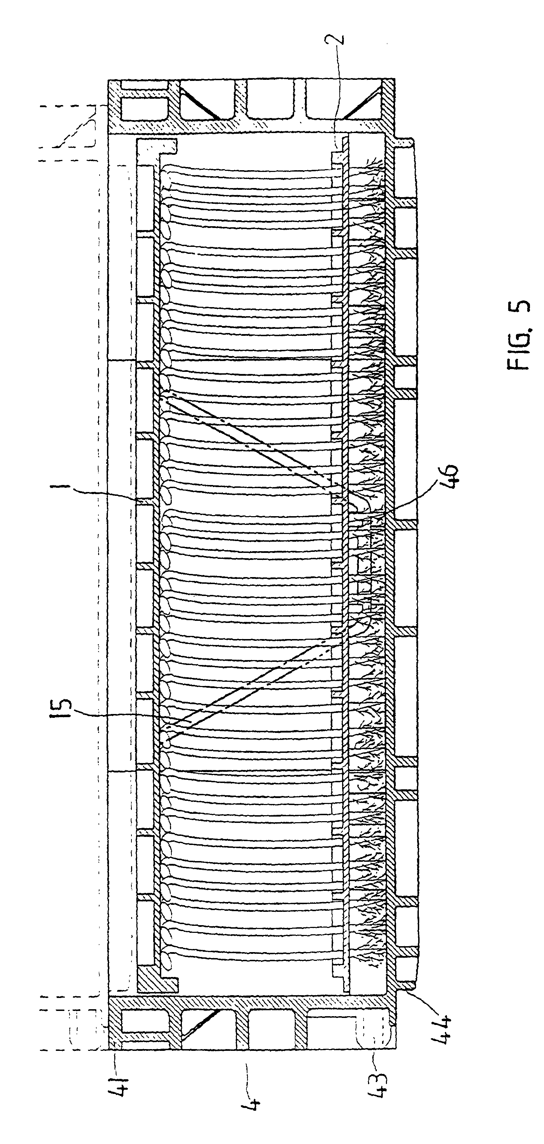

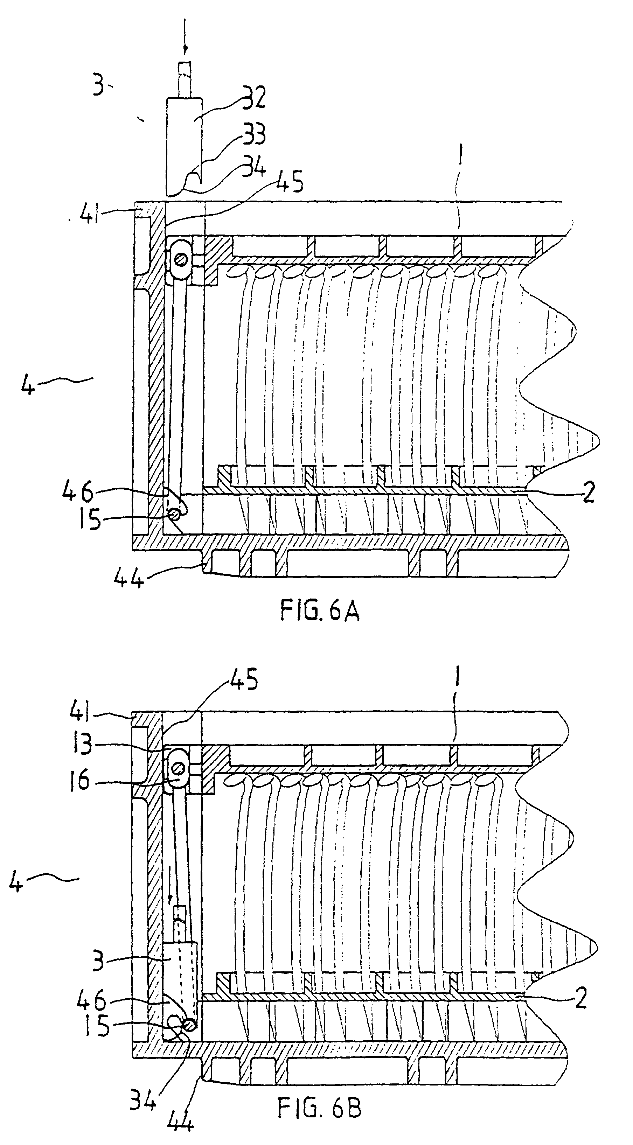

Referring now to Figures 5, 6A and 6B after the sprouts grow to a substantial height, the elastic engaging means 3 can be rotated through 180 degrees to release the spring belt 15 from the anchoring set 46. The cultivation unit can then be transported to another station for de-rooting.

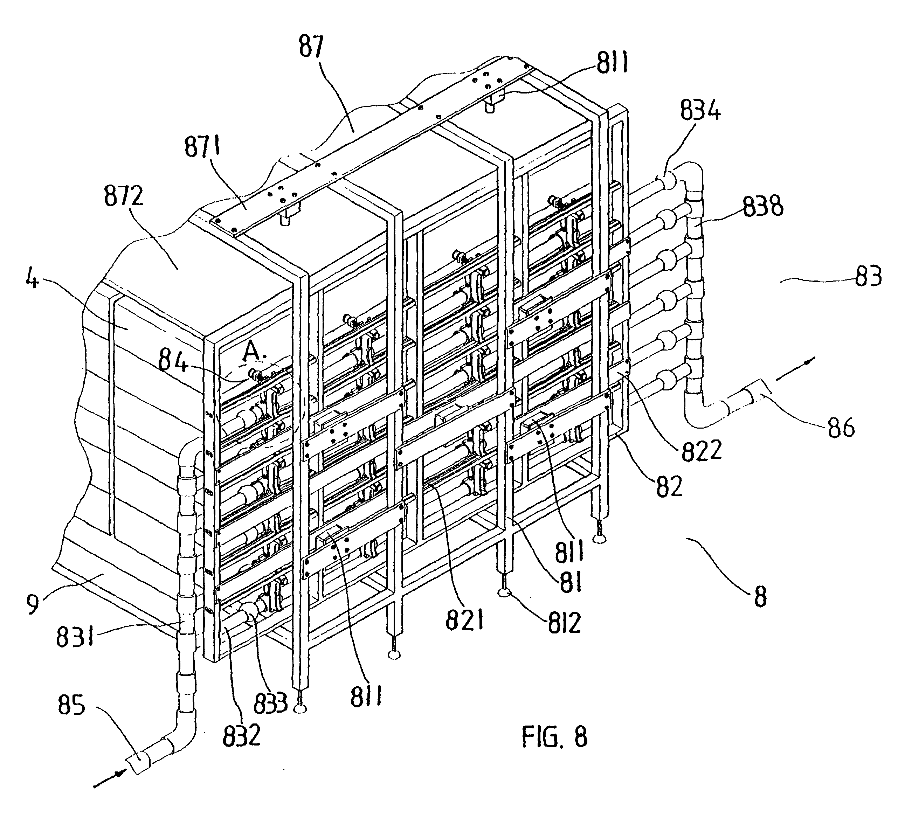

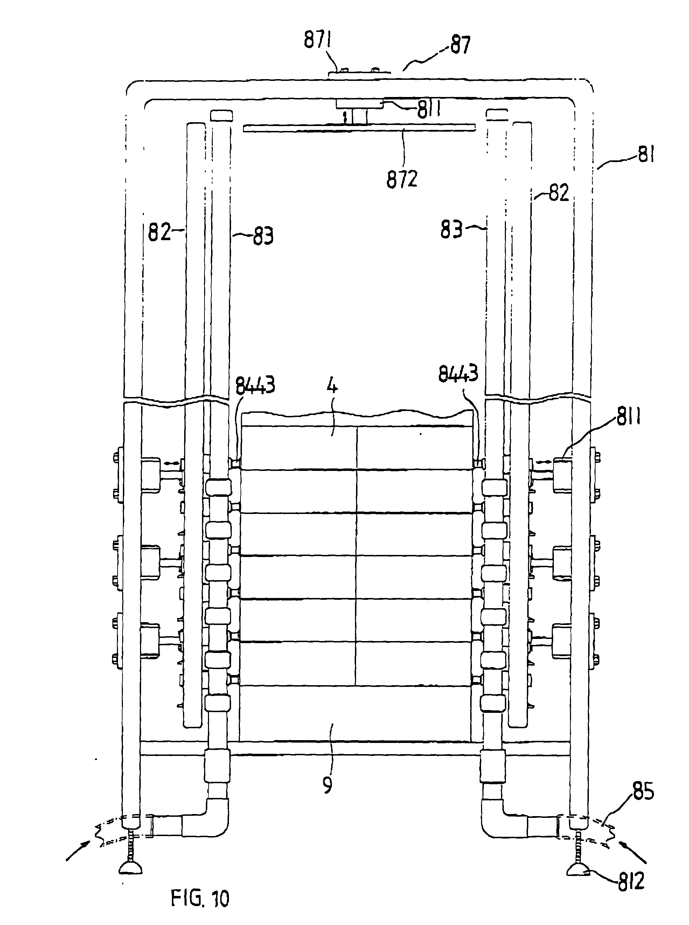

Figure 8 and Figure 10 show the preferred engagement of the cultivation box 4 on a mobile platform 9 with a water-supply device 8. The stacking arrangement of cultivation boxes 4 can be organised as appropriate to the application and the on-site transportation system. The water-supply device 8 comprises a square locating frame 81 as a installation frame for the water-feeding device 8, which has substantial height and width for accommodating multiple cultivation boxes 4. The locating frame 81 further has a plurality of adjustable legs 812 at the bottom of the locating frame 81, pairs of short cylinders 811 located symmetrically at appropriate locations with each piston rod engaging with a reinforcing plate 822 of every suspending distribution frame 82 inside the locating frame 81. The locating frame 81 further has a air-pressurised top cover 87 located on top of the locating frame 81. The air-pressed top cover 87 further has a plurality of short cylinders 811 installed at equi-spaced locations beneath a transverse beam 871 above the top edge of the locating frame 81, and has a top cover plate 872 engaged with the piston rods of the short cylinders 811. While the cultivation boxes 4 are located inside the locating frame 81, the top cover plate 872 will be pushed down by short cylinders 811 to firmly anchor the cultivation boxes 4 for ensuring the engagement of the distribution frames 82, the water-feeding connecting piping 83, and the water-feeding connectors 84. The distribution frame 82 further has a plurality of parallel and equi-spaced locating strips 821 for fastening a pair of water feeding connectors 84. Preferably, the locating strip 821 can be H-shaped and be made of FRP, aluminum alloy, or any convenient material.

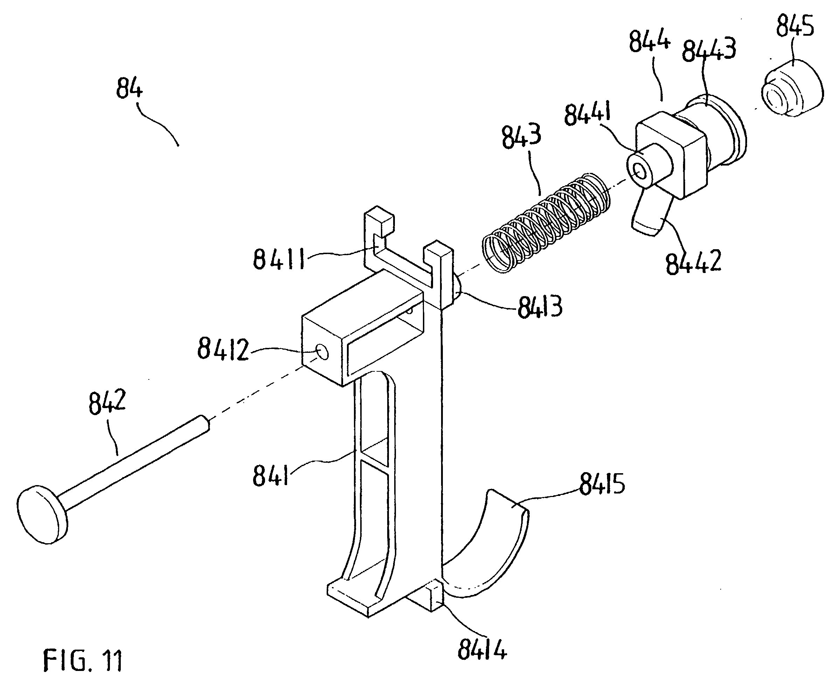

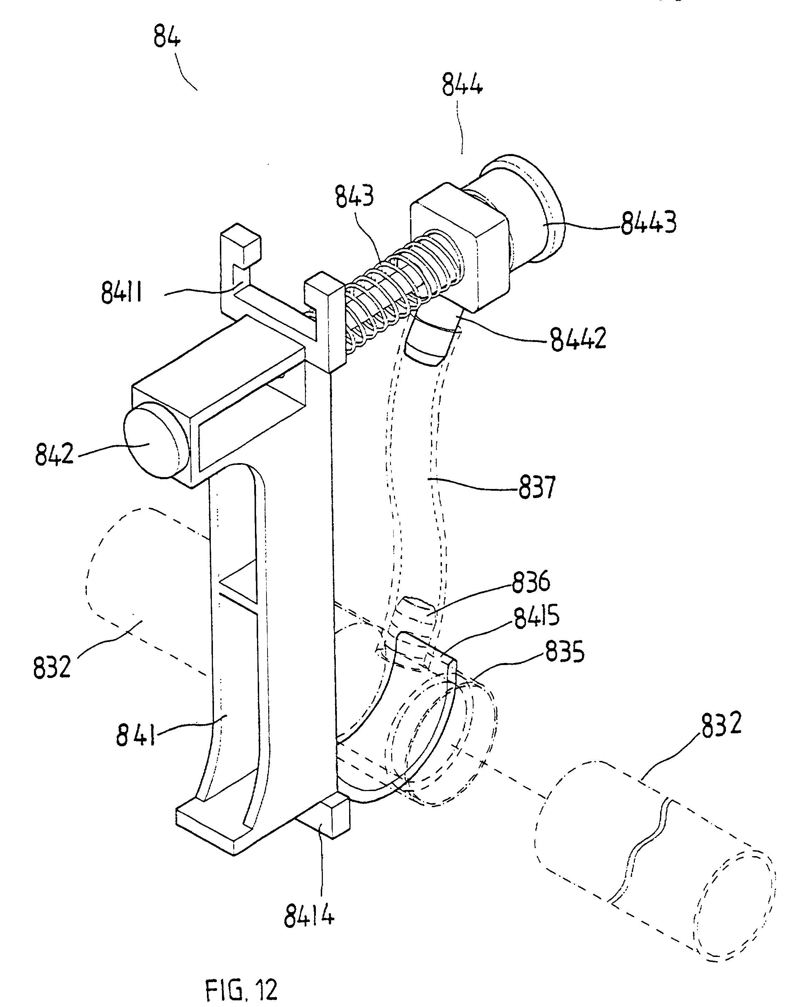

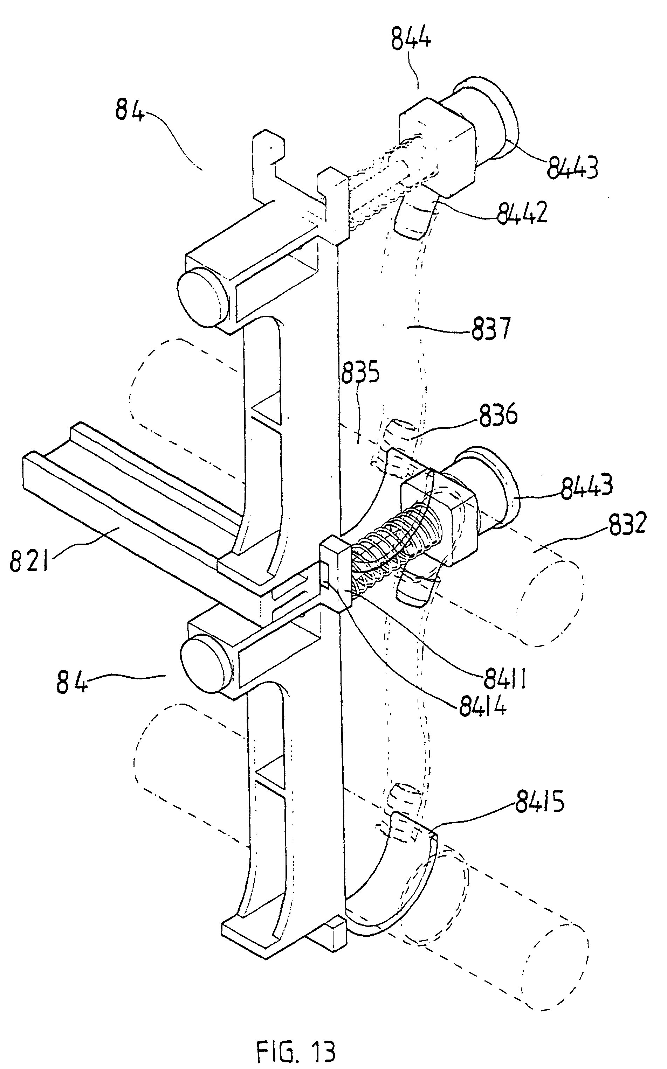

Referring now to Figure 11, a water-feed connector 84 in accordance with the present invention comprises a T-shaped main body 841, a pivot shaft 842, a spring 843, and a dual connector 844. The main body 841 further has a U-shaped engagement groove 8411 on its top edge, a through hole 8412 for receiving the pivot shaft 842 located on one side, a locating pipe 8413 extending from another side, an engagement portion 8414 extending from the bottom edge for engaging with the engagement groove 8411 of another water-feeding connector 84 (as shown in Figure 13), and a hanger plate 8415 extending from the side surface for horizontally locating a sub-supply pipe 832 of the water-feed connecting piping 832 (as shown in Figure 12.

On the end of the dual connector 844 is a protruding pipe 8441 for connection with one end of the spring 843. The pivot shaft 842 is connected to the protruding pipe 8441 after penetrating the through hole 8412 (as shown in Figure 11). The dual connector 844 has a hollow connecting end 8443 having a rubber sealing sleeve 845 inside. For smooth water feeding after connecting the water connector 84 with the external adapter 43 of the cultivation box 4, the dual connector 844 further comprises an oblique feeding head 8442 for connecting a hose 337 extending from the sub-supply pipe 832.

As shown in Figure 8, the water-feeding connecting piping 83 comprises a main supply pipe 831 at one end for connecting with the hose pipe 85 to supply water. The main supply pipe 831 further connects with a plurality of equi-spaced sub-supply pipes 832, with individual water feed control units 833 and water drain control units 834 for properly controlling the water circulation inside the cultivation boxes 4 within a default by air-pressure regulators, electromagnetic valves, or any the like. The sub-supply pipes 832 are connected to the body 841 of the water-feed connector 84 by a three way connector 835 (Figure 12) which provides a projecting head 836 to connect with a portion of the hose pipe 837. Preferably, the water from the sub-supply pipe 832 of the water-feeding connecting piping 83 can be recycled after a simply filtration process.

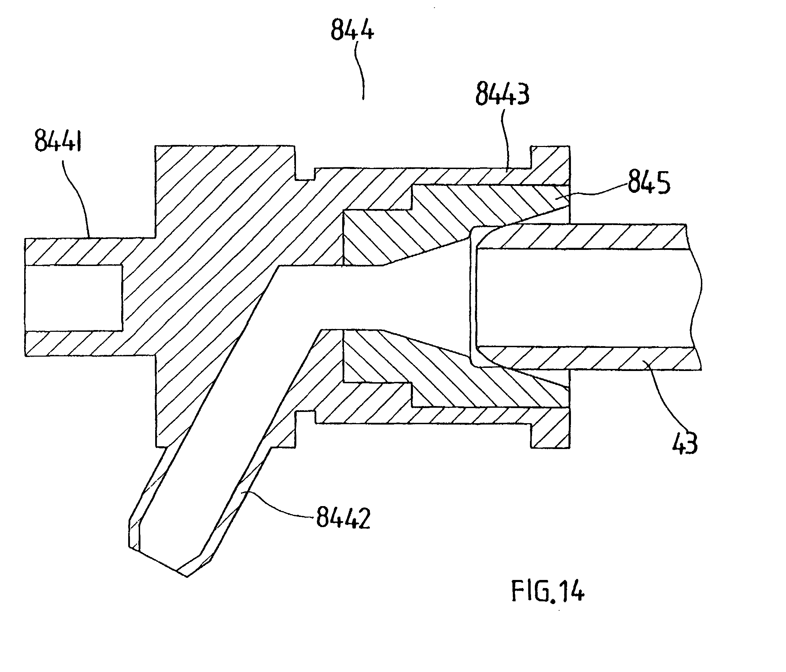

Referring now to Figure 10, after two stacks of cultivation boxes 4 on movable platforms 9 are positioned inside the locating frame 81 for automatic water feeding by the water-feed device 8, the computer controlled short cylinders 811 and the air-pressurised top cover 87 will be activated to push the top cover plate 872 downwards upon the top cultivation boxes 4 and also to push the distribution frames 82 inwards upon the sides of the cultivation boxes 4 for firmly anchoring the whole assembly. At the same time, each connecting end 8443 of the dual connector 843 of the water feed connector 84 will engage closely with a corresponding protruding water adapter 43 of a cultivation box 4 (as shown in Figure 14) and the water will be continuously fed through the connecting hose pipe 85.

The layer-wise water-feeding management in accordance with the present invention has the water supply control unit 833 and the water drain control unit 834 normally in a closed condition. When water-feeding is necessary, the water supply control unit 833 located at top sub-supply 832 will be opened to supply water at a fixed flow rate to the cultivation boxes 4 through the feeding hose 837 and the water adapter 43. After supplying a substantial amount of water into the cultivation boxes 4, the water supply control unit 833 will shut off the water flow and the water in the cultivation boxes 4 of the same layer will be automatically balanced. After a suitable period of time, the water drain control unit 834 will open and the water inside the cultivation boxes 4 will be drained out through the drain pipe 838, and further via the drain connection hose pipe 86 to a simple filtration apparatus for recycling the water. Similarly, the aforesaid water circulation management at the top layer is applied to other layers of the cultivation boxes assembly.

When the sprouts are fully grown, the short cylinders 811 will pull back the piston bars to their start positions to releasing the connection between the water adapter 43 and the water-feed connector 84. Then, the cultivation boxes 4 can be moved with the movable platforms 9 to following process stations.

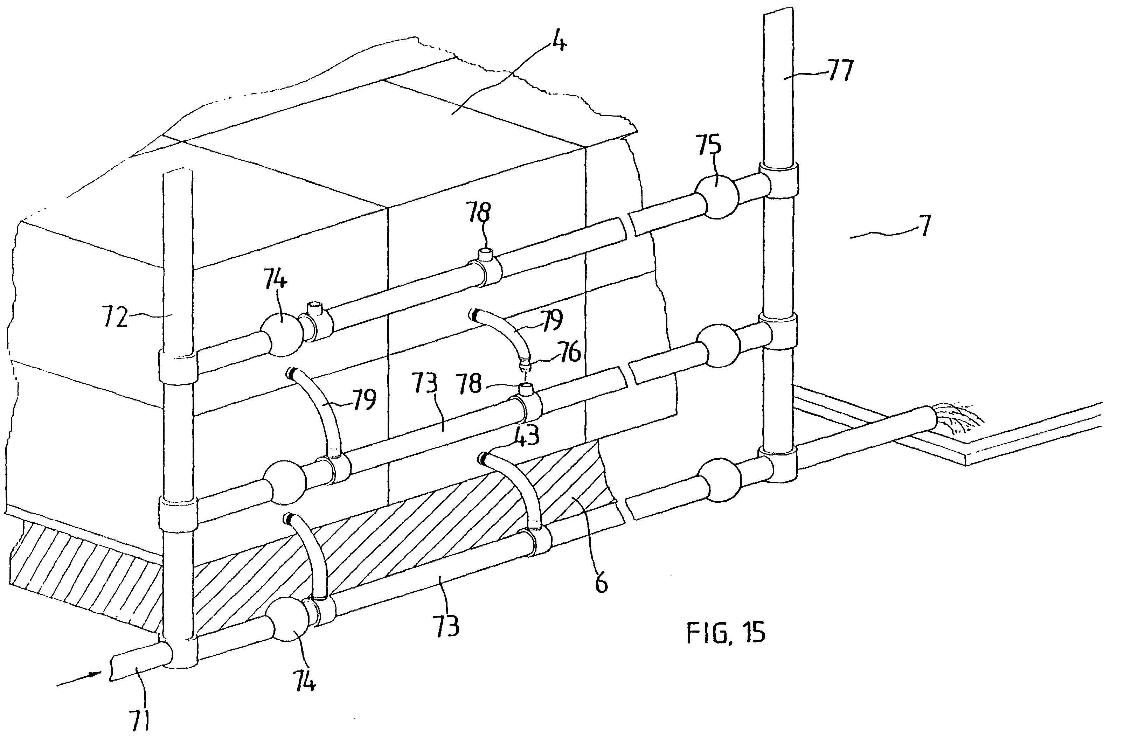

Figure 15 illustrates another embodiment of a stack of a plurality of the cultivation boxes according to the present invention, where another water-feed device 7 is applied. This water-feed device 7 is applied to cultivation boxes 4 cultivating different kinds of beans at the same time. In this embodiment, cultivation boxes 4 are placed on a flat base 6. The water supply is mainly from the main water supply pipe 71, to the water sub-supply pipe 72, and finally to the horizontal supply pipes 73. The spacing between two adjacent horizontal supply pipes is equal to the height of a cultivation box 4. At suitable locations close to both ends of the horizontal supply pipes 73, independent water-feed control units 74 and water-drain control units 75 are located for precisely controlling the timing and amount of the water supply. Water drained out of the cultivation boxes is led by the drain sub-pipes 77, and finally into a reservoir. Each horizontal supply pipe 73 further comprises a plurality of equi-spaced quick-fit connectors 78 for connecting with a quick-fit head 76 of the water-feed hose pipe 79 at one end. The other end of the hose pipe 79 is connected to the water adapter 43, for supplying water into the cultivation boxes 4. In addition, the water drained out of the cultivation boxes 4 is conducted to the drain sub-pipes 77 via the supply pipes 73. Similarly to the previous embodiment, mass production of sprouts of high quality can be achieved.

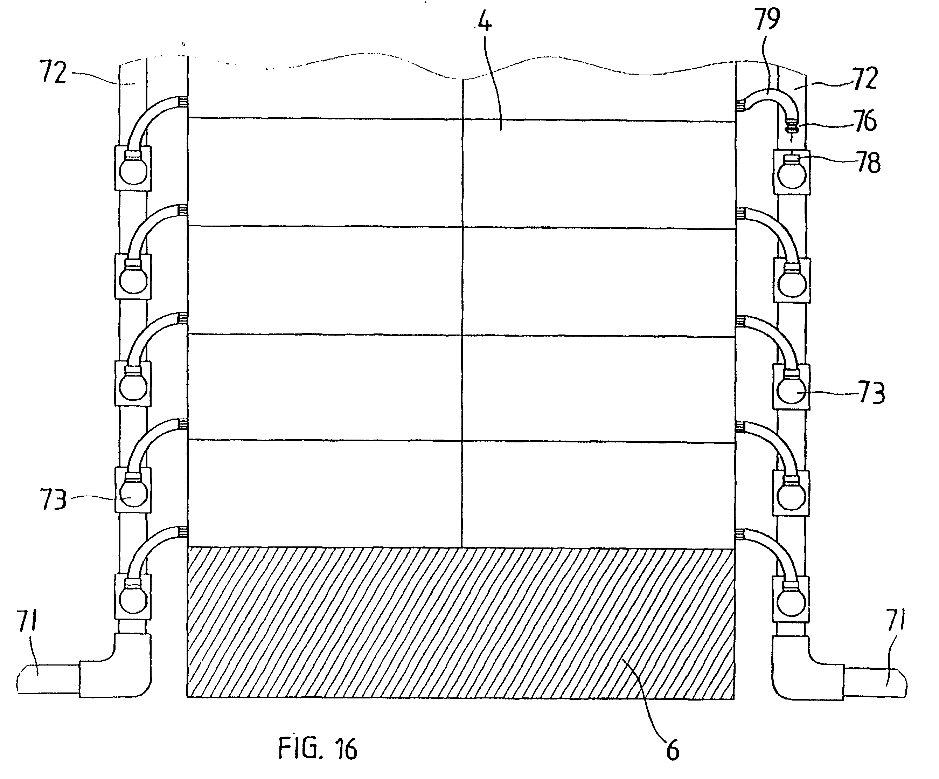

Referring now to Figure 16, a side view of the embodiment shown in Figure 15 is illustrated. By providing the water-feeding device 7, intensive sprout cultivation can be achieved.

According to the present invention, external piping is constructed to provide and drain water for sprout cultivation boxes, by computer controlling the water feed control units and the water drain control units. By providing cultivation boxes capable of being stacked and the 3-D piping network, space efficient sprout cultivation is then achieved.

In the sprout cultivation industry in Japan, no chemical except artificial C₂H₄ and N₂ can be added to promote growth. Full growth needs 7-8 days in summer and 10-12 days in winter to obtain sprouts 9-10 times the weight of the original bean. However, about 30% of the beans will be infertile or bacteria-contaminated. The finished sprouts can only be stored in a freezer for 3-4 days without rotting.

However, in accordance with the present invention, the application of elastic physical pressure over the growing sprouts by the covers 1 of the cultivation boxes 4 will force the sprouts to generate stress ethylene which promotes growth. Moreover, the oxidation of the stress ethylene (known as oxide ethylene) will inhibit bacteria growth, and thus a better sprout yield and quality can be achieved. By applying the present invention, about 3.5-4 days are needed for complete sprout growth with the sprout 13-14 times the weight of the original bean, both in winter and in summer. Due to lack of bacteria, the sprouts obtained by applying the present invention can be stored in a freezer for about 2 weeks. Thus, the present invention is advantageous over any work in the art.

While the present invention has been particularly shown and described with reference to preferred embodiments, it will be understood by those skilled in the art that various changes in form and detail may be without departing from the scope of the present invention.

## Claims

1. Apparatus for cultivating bean sprouts comprising at least one cultivation box (4) containing a tray (2) for receiving beans and having a perforate cover (1), the apparatus further comprising irrigation means comprising a supply conduit (831) and a drain conduit(838) connected by a delivery conduit (832) having at least one branch (43) for delivering water to the or each cultivation box (4), supply valve means (833) for controlling the flow of water from the supply conduit (831) to the delivery conduit (832) and drain valve means (834) for controlling flow of water from the delivery conduit (832) to the drain conduit (838).

2. Apparatus as claimed in claim 1, wherein the or each branch (43) comprises a socket projecting from the cultivation box (4) and a pipe releasably connected to the socket and to the delivery conduit (832) to allow fluid communication therebetween.

3. Apparatus as claimed in claim 1 or claim 2, wherein a plurality of like cultivation boxes (4) are stacked and each row of horizontally adjacent cultivation boxes (4) in the stack is provided with a delivery conduit (832), supply valve means (833) and drain valve means (834).

4. Apparatus as claimed in any preceding claim, further comprising resilient attachment means for connecting the perforate cover (1) to the cultivation box (4) so as to allow the cover (1) to be pushed upwardly in response to growth of beans in the box (4).

5. Apparatus as claimed in claim 4, wherein the resilient attachment means comprises a resilient arm (15) attached to the cover (1) and at least one hook (46) in the cultivation box for releasable engagement over the resilient arm (15).

6. Apparatus as claimed in claim 5, further comprising an engagement tool to aid engaging and disengaging the resilient arm (15) with the hook (46).

7. Apparatus as claimed in any preceding claim, wherein the tray (2) is sub-divided into a plurality of compartments arranged in grid form and the perforate cover (1) includes a plurality of reinforcing ribs arranged in grid form in correspondence with the compartments in the tray (2).

8. Apparatus as claimed in any preceding claim, further comprises a filter located in the or each branch (43).

9. Apparatus as claimed in claim 3, further comprising a frame for surrounding a stack of cultivation boxes (4) and including compression means to stabilise the stack.

10. Apparatus as claimed in claim 9, wherein the compression means comprises pressure plates actuated by adjustment cylinders.

11. Apparatus as claimed in claim 9 or claim 10, wherein the frame is provided with adjustable legs.

12. Apparatus as claimed in any preceding claim, wherein the supply valve means (833) and the drain valve means (834) comprise air press regulators or electro-magnetic valves.

## Patentansprüche

1. Vorrichtung zum Züchten von Bohnensprossen, die mindestens einen Züchtungskasten (4) aufweist, der eine Schale (2) zur Aufnahme von Bohnen enthält und eine perforierte Abdeckung (1) aufweist,
wobei die Vorrichtung ferner eine Bewässerungseinrichtung aufweist, die folgendes aufweist:
eine Versorgungsleitung (831) und eine Auslaßleitung (838), welche an eine Zuführungsleitung (832) angeschlossen ist, die mindestens eine Abzweigung (43) für die Zuführung von Wasser zu dem oder jedem Züchtungskasten (4) besitzt;
eine Versorgungsventileinrichtung (833) zur Steuerung der Strömung von Wasser aus der Versorgungsleitung (831) zu der Zuführungsleitung (832); und
eine Auslaßventileinrichtung (834) zur Steuerung der Strömung von Wasser aus der Zuführungsleitung (832) zu der Auslaßleitung (838).

2. Vorrichtung nach Anspruch 1,
wobei die oder jede Abzweigung (43) einen Anschluß, der von dem Züchtungskasten (4) vorsteht, und ein Rohr aufweist, das lösbar mit dem Anschluß und mit der Zuführungsleitung (832) verbunden ist, um eine Fluidverbindung zwischen ihnen zu ermöglichen.

3. Vorrichtung nach Anspruch 1 oder 2,
wobei eine Vielzahl von gleichen Züchtungskästen (4) gestapelt ist und jede Reihe von horizontal benachbarten Züchtungskästen (4) in dem Stapel mit einer Zuführungsleitung (832), einer Versorgungsventileinrichtung (833) und einer Auslaßventileinrichtung (834) versehen ist.

4. Vorrichtung nach einem der vorhergehenden Ansprüche,
die ferner eine elastische Befestigungseinrichtung aufweist, um die perforierte Abdeckung (1) mit dem Züchtungskasten (4) zu verbinden, um es der Abdeckung (1) zu ermöglichen, in Abhängigkeit von dem Wachstum der Bohnen in dem Kasten (4) nach oben gedrückt zu werden.

5. Vorrichtung nach Anspruch 4,
wobei die elastische Befestigungseinrichtung einen elastischen Arm (15), der an der Abdeckung (1) angebracht ist, und mindestens einen Haken (46) in dem Züchtungskasten für einen elastischen Eingriff über den elastischen Arm (15) aufweist.

6. Vorrichtung nach Anspruch 5,
die ferner ein Eingriffswerkzeug aufweist, um den Eingriff und das Lösen des Eingriffes des elastischen Armes (15) mit dem Haken (46) zu unterstützen.

7. Vorrichtung nach einem der vorhergehenden Ansprüche,
wobei die Schale (2) in eine Vielzahl von Abteilen unterteilt ist, die in Gitterform angeordnet sind, und wobei die perforierte Abdeckung (1) eine Vielzahl von Verstärkungsrippen aufweist, die in einer den Abteilen in der Schale (2) entsprechenden Gitterform angeordnet sind.

8. Vorrichtung nach einem der vorhergehenden Ansprüche,
die ferner einen Filter aufweist, der in der oder jeder Abzweigung (23) angeordnet ist.

9. Vorrichtung nach Anspruch 3,
die ferner einen Rahmen aufweist, um einen Stapel von Züchtungskästen (4) zu umgeben, wobei der Rahmen eine Kompressionseinrichtung aufweist, um den Stapel zu stabilisieren.

10. Vorrichtung nach Anspruch 9,
wobei die Kompressionseinrichtung Druckplatten aufweist, die mit Stellzylindern betätigt werden.

11. Vorrichtung nach Anspruch 9 oder 10,
wobei der Rahmen mit einstellbaren Füßen versehen ist.

12. Vorrichtung nach einem der vorhergehenden Ansprüche,
wobei die Versorgungsventileinrichtung (833) und die Auslaßventileinrichtung (834) Luftdruckreguliereinrichtungen oder Elektromagnetventile aufweisen.

## Revendications

1. Appareil pour cultiver des germes de haricots comprenant au moins un caisson de culture (4) contenant un plateau (2) pour recevoir des haricots et comportant un couvercle perforé (1), l'appareil comprenant également un moyen d'irrigation comprenant un conduit d'alimentation (831) et un conduit d'évacuation (838) reliés par un conduit de distribution (832) comportant au moins un embranchement (43) pour distribuer de l'eau au/à chaque caisson de culture (4), un moyen de vanne d'alimentation (833) pour commander l'écoulement d'eau du conduit d'alimentation (831) au conduit de distribution (832) et un moyen de vanne d'évacuation (834) pour commander l'écoulement d'eau du conduit de distribution (832) au conduit d'évacuation (838).

2. Appareil selon la revendication 1, dans lequel l'embranchement ou chaque embranchement (43) comprend une douille en saillie depuis le caisson de culture (4) et un tuyau relié, avec possibilité de séparation, à la douille et au conduit de distribution (832) pour permettre une communication de fluide entre eux.

3. Appareil selon la revendication 1 ou la revendication 2, dans lequel une pluralité de caissons de culture identiques (4) sont empilés et chaque rangée de caissons de culture adjacents horizontalement (4) dans la pile est dotée d'un conduit de distribution (832), d'un moyen de vanne d'alimentation (833) et d'un moyen de vanne d'évacuation (834).

4. Appareil selon l'une quelconque des revendications précédentes, comprenant un moyen de fixation élastique pour relier le couvercle perforé (1) au caisson de culture (4) afin de permettre au couvercle (1) d'être poussé vers le haut en réaction au développement des haricots dans le caisson (4).

5. Appareil selon la revendication 4, dans lequel le moyen de fixation élastique comprend un bras élastique (15) fixé au couvercle (1) et au moins un crochet (46) dans le caisson de culture (4) pour un engagement, avec possibilité de séparation, sur le bras élastique (15).

6. Appareil selon la revendication 5, comprenant également un outil d'engagement pour faciliter l'engagement et le dégagement du bras élastique (15) avec le crochet (46).

7. Appareil selon l'une quelconque des revendications précédentes, dans lequel le plateau (2) est subdivisé en une pluralité de compartiments agencés en une grille et le couvercle perforé (1) comprend une pluralité de nervures de renforcement agencées en une grille en correspondance des compartiments dans le plateau (2).

8. Appareil selon l'une quelconque des revendications précédentes, comprenant également un filtre situé dans l'embranchement ou chaque embranchement (43).

9. Appareil selon la revendication 3, comprenant également un châssis pour entourer une pile de caissons de culture (4) et comprenant un moyen de compression pour stabiliser la pile.

10. Appareil selon la revendication 9, dans lequel le moyen de compression comprend des plaques de pression actionnées par des cylindres de réglage.

11. Appareil selon la revendication 9 ou 10, dans lequel le châssis est doté de jambages réglables.

12. Appareil selon l'une quelconque des revendications précédentes, dans lequel le moyen de vanne d'alimentation (833) et le moyen de vanne d'évacuation (834) comprennent des régulateurs à pression d'air ou des vannes électromagnétiques.
